# EUROPEAN PATENT APPLICATION

(11) **EP 4 628 411 A1**
(43) Date of publication of application: **08.10.2025**
(21) Application number: 23895953.0
(22) Date of filing: 25.06.2023
(51) Int. Cl.: B64U 30/14, B64C 29/00

(54) **SUSPENDED OUTER ARM AND MODULAR AIRCRAFT**

(30) Priority: 02.12.2022 US 202263385771 P; 02.12.2022 US 202263385772 P; 02.12.2022 US 202263385773 P
(71) Applicant: Autoflight (Kunshan) Co., Ltd., Suzhou, Jiangsu 215345 (CN)
(72) Inventor: TIAN, Yu, Suzhou, Jiangsu 215345 (CN); CUI, Yongqiang, Suzhou, Jiangsu 215345 (CN)
(74) Representative: MERH-IP Matias Erny Reichl Hoffmann Patentanwälte PartG mbB
(86) International application number: PCT/CN2023/102124
(87) International publication number: WO 2024/113789

(57) **Abstract**

The invention belongs to the field of aircraft and discloses a suspended outer arm, which is applied to an aircraft and comprises an outer arm body, which has a linear structure in a vertical projection direction. The outer arm body is provided with a plurality of openings for holding the lift motors. The outer arm body presents a structure that converges from each opening to both ends. The outer arm body can be attached to the fixed wing of the aircraft according to the different take-off weight.

## Description

### FIELD OF THE INVENTION

The invention relates to the field of aircraft, in particular to a suspended outer arm and a modular aircraft.

### BACKGROUND OF THE INVENTION

In the actual use process, it is found that most of the existing aircraft are integrated design, the arms cannot be disassembled, and most of them are stacked repeatedly, which cannot improve the efficiency of the lift motor. Therefore, the installation and disassembly of the aircraft require specialized technicians, and in order to cope with the sudden different working conditions, such as air taxi, air ambulance, etc., it is urgent to provide a modular aircraft.

### SUMMARY OF THE INVENTION

The present invention aims to provide a suspended outer arm and a modular aircraft, which are simple to operate and can meet the different functional and mission requirements of the aircraft.

To achieve this purpose, the present invention adopts the following technical solutions:
A suspended outer arm, suitable to be applied to an aircraft, comprises:
An outer arm body, which has a linear structure in the vertical projection direction;
The outer arm body comprises a plurality of openings for accommodating lift motors;
The outer arm body presents a structure that converges from each opening towards both ends;
The outer arm body can be externally suspended on the fixed wings of the aircraft according to different take-off weights.

As a preferred embodiment, the outer arm body has a streamlined design in the cross-section along its length, with the curvature of the arc at one end being smaller than that at the other end, and the cross-section gradually converging from the middle to both ends. This streamlined design can reduce the vortex formed by the interference of the propeller with a body of the aircraft, thereby increasing the efficiency of the lift motor.

As a preferred embodiment, the suspended outer arm has an arm recess, and the cross-section of the arm recess in the length direction is an inverted isosceles trapezoid, which is adapted to the shape of a separation surface of the fixed wing.

A modular aircraft, which comprises:
Left and right fixed wings; left and right canard wings; an avionics cabin, which is connected to the left and right fixed wings; left and right inner arms, which connect the left and right fixed wings to the left and right canard wings respectively; the left inner arm has first, second, and third lift propellers and a left vertical tail; the right inner arm has fourth, fifth, and sixth lift propellers and a right vertical tail; and the suspended outer arm as described above.

According to the requirement of increased cruise load, modular components of the aircraft can be installed without changing the structure of the aircraft's flight platform to meet the different functional and mission requirements of the aircraft.

As a preferred embodiment, the modular components of the aircraft comprise a quickly detachable canard wing outer segment. When it is required to increase the lift of the aircraft in the fixed-wing state by 10% to 20% based on the original lift value obtained by the aircraft's flight platform, the quickly detachable canard wing outer segment is installed on the inner arm.

As a preferred embodiment, the modular components of the aircraft comprise a quickly detachable suspended outer arm. When it is required to increase the lift of the aircraft in the rotor state by 20% to 70% based on the original lift value obtained by the aircraft's flight platform, the quickly detachable suspended outer arm is installed.

As a preferred embodiment, the suspended outer arm is installed to the leading edge of the left and right fixed wings, or to the trailing edge of the left and right fixed wings, or to both the leading and trailing edges of the left and right fixed wings.

As a preferred embodiment, the canard wing outer segment comprises a positioning member and a locking member. After the canard wing outer segment is installed at a fixed position on the inner arm through the positioning member, it is locked to the inner arm through the locking member.

As a preferred embodiment, the distance between the suspended outer arm and the inner arm is at least greater than the sum of the rotation radius of the lift propellers installed on the inner arm, the rotation radius of the lift propellers installed on the suspended outer arm, and a convective clearance.

As a preferred embodiment, the convective clearance is 8% to 15% of a maximum of a propeller diameter on the suspended outer arm and on the inner arm.

The beneficial effects of the present invention are as follows: The present invention, through a streamlined arm, can reduce the vortex formed by the interference of the propeller with a body of the aircraft, thereby increasing the efficiency of the lift motor; the present invention also, through a modular aircraft, can increase the lift of the aircraft in the fixed-wing state or the rotor state by quickly installing the canard wing outer segment or the suspended outer arm without changing the structure of the aircraft's flight platform.

### BRIEF DESCRIPTION OF DRAWINGS

FIG. 1 is a schematic diagram of the aircraft according to the present invention;
FIG. 2 is a schematic diagram of the streamlined arm according to the present invention;
FIG. 3 is a schematic diagram of the canard outer segment according to the present invention;
FIG. 4 is a schematic diagram of the suspended outer arm according to the present invention.

### DETAILED DESCRIPTION

The following embodiments further illustrate the technical solution of the present invention. It can be understood that the specific embodiments described here are only used to explain the present invention. Additionally, it should be noted that for ease of description, only the relevant parts of the present invention are shown in the accompanying drawings, not all of them.

In the description of this invention, it should be noted that unless otherwise specified and limited, the terms "installation", "connection", and "connection" should be broadly understood, for example, they can be fixed connections or detachable connections. It can be a mechanical connection or an electrical connection. It can be directly connected, indirectly connected through an intermediate medium, or connected internally between two components. For ordinary technical personnel in this field, the specific meanings of the above terms in this invention can be understood in specific situations.

In this invention, unless otherwise specified and limited, the first feature above or below the second feature may include direct contact between the first and second features, or may include contact between the first and second features through another feature between them instead of direct contact. Moreover, the first feature being 'above', 'above', and 'above' the second feature includes the first feature being directly above and diagonally above the second feature, or simply indicating that the first feature is horizontally higher than the second feature. The first feature being "below", "below", and "below" include the first feature being directly below and diagonally below the second feature, or simply indicating that the first feature has a lower horizontal height than the second feature.

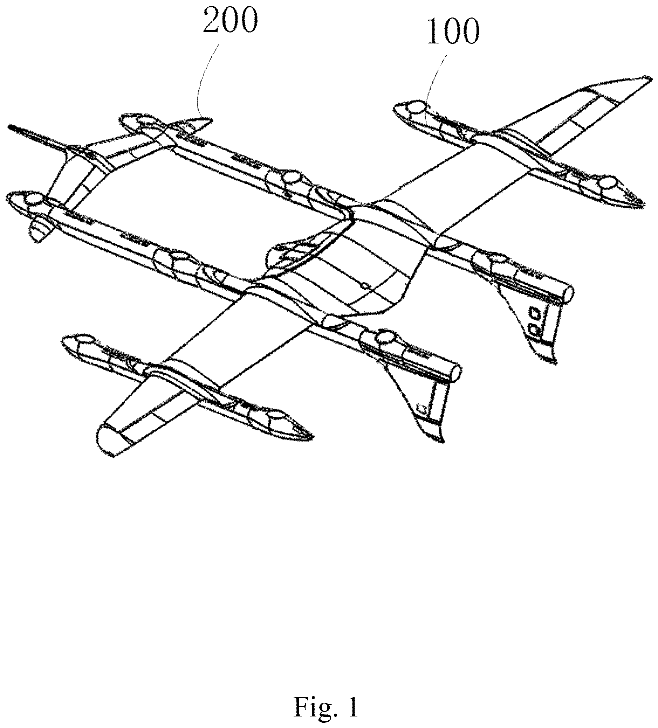

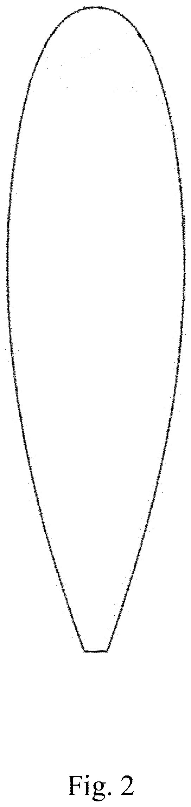

As shown in Figures 1-2, the present invention provides a suspended outer arm suitable to be applied to an aircraft, characterized in that the suspended outer arm 100 comprises an outer arm body, which has a linear structure in the vertical projection direction. The outer arm body has several openings for accommodating lift motors. The outer arm body presents a structure that converges from each opening to both ends. The outer arm body can be externally mounted on the fixed wing of the aircraft according to different takeoff weights.

Furthermore, the outer arm body presents a streamlined design along its length in cross-section, where the curvature of one end is smaller than that of the other end, and the cross-section gradually converges from the middle to both ends. The streamlined design can reduce the vortices formed by the propeller due to interference with a body of the aircraft, thereby increasing the efficiency of the lift motor.

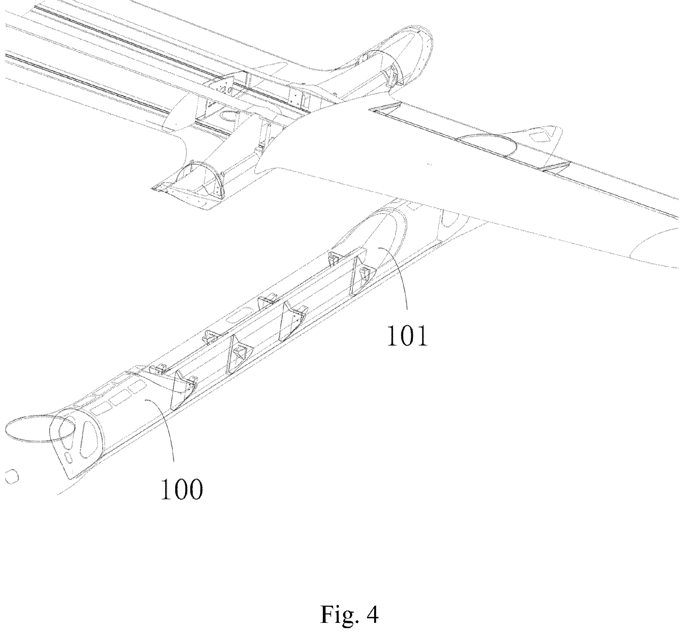

As shown in Figure 4, preferably, the suspended outer arm 100 has an arm recess 101, which has an inverted isosceles trapezoid cross-section in its length direction, used to adapt to the outer separation surface of the fixed wing of the aircraft. The outer separation surface of the fixed wing has local carbon fiber reinforcement at the flange.

The inverted isosceles trapezoid of the arm recess 101 meets the aerodynamic surface requirements.

As shown in Figure 1, the present invention further provides a modular aircraft comprising: a left fixed wing and a right fixed wing; Left and right canards; The avionics compartment is connected to the left and right fixed wings; The left inner arm connects the left fixed wing with the left canard; The right inner arm connects the right fixed wing with the right canard; The left inner arm has first, second, and third lift propellers and a left vertical tail; The right inner arm has fourth, fifth, and sixth lift propellers and a right vertical tail; And the suspended outer arm 100 described in the above scheme. According to the requirement of increasing cruise load, modular components of the aircraft can be installed without changing the structure of the flight platform to meet the different functional and mission requirements of the aircraft.

Specifically, the modular components of the aircraft comprise a quickly detachable canard outer segment 200. When it is required to increase the lift of the aircraft in a fixed wing state by 10% to 20% based on the original lift value obtained on the applicable aircraft flight platform, the quickly detachable canard outer segment 200 is installed on the inner arm.

By adding the canard outer segment 200, it is possible to increase the lift of the aircraft in a fixed wing state by 10% -20% based on the original lift value obtained on the original aircraft flight platform. After installing the detachable canard outer segment 200, it is possible to overcome the head sag effect during flight, avoid unexpected pitching moments, and thus avoid affecting the flight efficiency of the drone due to the need to compensate for this pitching moment. In addition, after installing the canard outer segment 200, the combination of the canard outer segment and the original aircraft flight platform structure can improve the static stability margin of the aircraft by about 2%, thereby reducing the control loss of the flight control system.

Similarly, the modular components of the aircraft comprise a quickly detachable suspended outer arm 100. When it is required to increase the lift of the aircraft in rotor state by 20% to 70% based on the original lift value obtained on the applicable aircraft flight platform, the installation of the quickly detachable suspended outer arm 100 is chosen.

By adding a suspended outer arm 100, on the one hand, from the perspective of the overall structural design of the aircraft, it is required that the suspended outer arm be close to the central axis of the aircraft, in order to reduce the weight of the aircraft and save more weight and space to increase power and payload. On the other hand, according to aerodynamic requirements, when the propeller operates, corresponding airflow will be generated. If the suspended outer arm 100 and the inner arm are installed too close, flow interference will occur, which will form vortices and reduce the efficiency of the lift motor. Therefore, the installation of the suspended outer arm 100 and the inner arm cannot be too close. But if it is too far away, it will inevitably increase the weight of the aircraft. Therefore, when the convective clearance is 8% to 15% of a maximum of a propeller diameter on the suspended outer arm 100 and on the inner arm, it can balance the interference vortex generated between the suspended outer arm 100 and the inner arm, as well as the weight issue of the aircraft, and can simultaneously meet the payload and aerodynamic efficiency of the aircraft.

Of course, without changing the structure of the aircraft's flight platform, by quickly disassembling the lift propellers on the suspended outer arm 100 and the outer arm, if the range is insufficient or noise reduction is required, the lift of the aircraft in the fixed wing state can be quickly reduced, reducing energy consumption and noise decibels.

For example, the suspended outer arm 100 is installed to the leading edge of the left and right fixed wings, increasing the lift of the aircraft in rotor state by 20% to 40% based on the original lift value obtained from the aircraft flight platform. Alternatively, the suspended outer arm 100 can be installed to the trailing edge of the left and right fixed wings to increase the lift of the aircraft in rotor state by 25% to 45% based on the original lift value obtained from the aircraft flight platform. Alternatively, the suspended outer arm 100 can be installed to the leading and trailing edges of the left and right fixed wings, respectively, to increase the lift of the aircraft in rotor state by 50% to 70% based on the original lift value obtained on the aircraft flight platform. With the sole mounting to the leading or trailing edge, the aircraft's center of gravity can be adjusted to different positions.

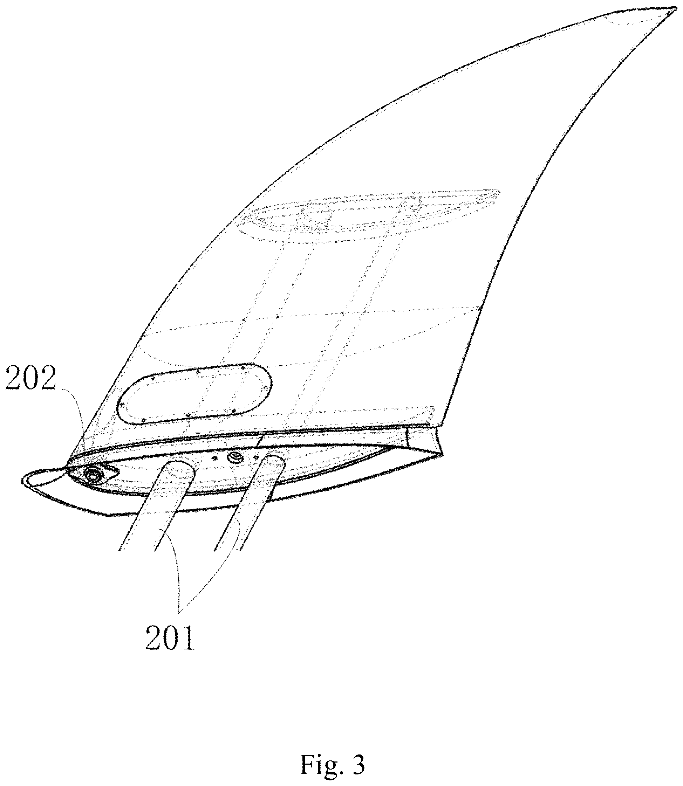

As shown in Figure 3, further, the canard outer segment 200 comprises a positioning member 201 and a locking member 202. After installing the canard outer segment 200 at a fixed position on the inner arm through the positioning member 201, the canard outer segment 200 and the inner arm are locked by the locking member 202.

The positioning member 201 is used to quickly position the canard outer segment 200 onto the inner arm, saving operation time. Then, the locking member 202 is used for locking to prevent the canard outer segment 200 from detaching from the inner arm during drone operation.

Furthermore, the distance between the suspended outer arm 100 and the inner arm is at least greater than the sum of the rotation radius of the lift propeller installed on the inner arm, the rotation radius of the lift propeller installed on the suspended outer arm 100, and the convective clearance. Among them, the convective clearance is 8% to 15% of the maximum of the propeller diameters on the suspended outer arm and on the inner arm.

Furthermore, regarding the connection method between the suspended outer arm 100 and the aircraft wing, this scheme adopts a bolt clamping form to fix the suspended outer arm 100 and the wing, with eight bolts as the main fixing bolts, bearing most of the load. The single bearing capacity range of the main fixing bolt is 1.8 tons to 2.2 tons. In addition to the main fixing bolt, there are several auxiliary fixing bolts at the front and rear edges of the suspended outer arm 100 to assist in bearing force. The single bearing capacity range of each auxiliary fixing bolt is 680 kg -720 kg. When installing, first insert the eight main fixing bolts from the openings on the wing, align them with the threaded holes on the suspended outer arm, and tighten the bolts. Then tighten the auxiliary fixing bolts in sequence to complete the quick installation of the suspended outer arm 100. The same applies to disassembly. After removing the main and auxiliary fixing bolts, the suspended outer arm 100 can be quickly installed and disassembled within 30 minutes.

The above embodiments are only illustrative of the principles and effects of the present invention. Anyone familiar with this technology may modify or alter the above embodiments without violating the application purpose of this invention. Therefore, all equivalent modifications or changes made by those with ordinary knowledge in the relevant technical field without departing from the purpose disclosed in this invention should still be covered by the claims of this invention.

## Claims

1. A suspended outer arm, suitable to be applied to an aircraft, **characterized in that**,
the suspended outer arm 100 comprises:
an outer arm body, wherein the outer arm body exhibits a linear structure in a vertical projection;
wherein the outer arm body comprises a plurality of openings suitable to accommodate lift motors;
wherein the outer arm body tapers from each opening toward both ends;
wherein the outer arm body is optionally attachable to fixed wings of the aircraft depending on takeoff weight requirements.

2. The suspended outer arm according to claim 1, **characterized in that**:
the outer arm body features a streamlined cross-sectional design along its length, where an arc curvature at one end is smaller than at the other end, and the cross-section tapers gradually from the middle toward both ends;
wherein the streamlined design reduces vortices formed by propeller interference with a body of the aircraft, thereby enhancing efficiency of the lift motors.

3. The suspended outer arm according to claim 2, **characterized in that**:
the suspended outer arm 100 comprises an arm recess 101, wherein the cross-section of the arm recess 101 along its length is an inverted isosceles trapezoid, adapted to match a separation surface geometry of the fixed wing.

4. A modular aircraft, comprising:
a left fixed wing and a right fixed wing;
a left canard and a right canard;
an avionics compartment coupled to the left fixed wing and the right fixed wing;
a left inner arm connecting the left fixed wing to the left canard, equipped with first, second, third lift propellers and a left vertical stabilizer;
a right inner arm connecting the right fixed wing to the right canard, equipped with fourth, fifth, sixth lift propellers and a right vertical stabilizer;
and the suspended outer arm 100 according to any one of claims of 1-3;
wherein modular aircraft components are selectively installable without altering the aircraft platform structure to meet varying functional and mission demands under increased cruise payload requirements.

5. The modular aircraft according to claim 4, **characterized in that**:
the modular aircraft components comprise a rapidly detachable canard outer segment 200;
when requiring a 10% to 20% lift increase in fixed-wing configuration compared to the original lift value of the aircraft platform, the canard outer segment 200 is installed on the inner arm.

6. The modular aircraft according to claim 4, **characterized in that**:
the modular aircraft components comprise a rapidly detachable suspended outer arm 100;
when requiring a 20% to 70% lift increase in rotor configuration compared to the original lift value of the aircraft platform, the suspended outer arm 100 is installed.

7. The modular aircraft according to claim 6, **characterized in that**:
the suspended outer arm 100 is mounted to leading edges of the left fixed wing and of the right fixed wing, or to trailing edges thereof, or to both the leading and trailing edges.

8. The modular aircraft according to claim 5, **characterized in that**:
the canard outer segment 200 comprises a positioning member 201 and a locking member 202;
after installing the canard outer segment 200 via the positioning member 201 at a fixed position on the inner arm, the locking member 202 secures the canard outer segment 200 to the inner arm.

9. The modular aircraft according to claim 6, **characterized in that**:
a distance between the suspended outer arm 100 and the inner arm exceeds the sum of:
a rotational radius of lift propellers mounted on the inner arm,
a rotational radius of lift propellers mounted on the suspended outer arm 100,
and a convective clearance.

10. The modular aircraft according to claim 9, **characterized in that**:
the convective clearance equals 8% to 15% of a maximum of a propeller diameter on the suspended outer arm and on the inner arm.
